# EUROPEAN PATENT APPLICATION

(11) **EP 4 772 775 A1**
(43) Date of publication of application: **08.07.2026**
(21) Application number: 24858432.8
(22) Date of filing: 22.08.2024
(51) Int. Cl.: F16K 1/38, F16K 1/32, F25B 41/34

(54) **ELECTRONIC EXPANSION VALVE, THERMAL MANAGEMENT SYSTEM COMPRISING SAME, AND VEHICLE**

(30) Priority: 31.08.2023 CN 202311130045
(71) Applicant: BYD Company Limited, Shenzhen, Guangdong 518118 (CN)
(72) Inventor: YE, Meijiao, Shenzhen, Guangdong 518118 (CN); LIU, Leqiang, Shenzhen, Guangdong 518118 (CN); XU, Min, Shenzhen, Guangdong 518118 (CN)
(74) Representative: Mathys & Squire
(86) International application number: PCT/CN2024/113934
(87) International publication number: WO 2025/044890

(57) **Abstract**

Provided are an electronic expansion valve (1) and a thermal management system having the same, and a vehicle. The electronic expansion valve (1) includes: a valve seat assembly (10), where the valve seat assembly (10) is provided with a valve port (12); a valve needle assembly (20), where the valve needle assembly (20) is disposed in the valve seat assembly (10) capable of moving reciprocally to open or close the valve port (12); a conversion member (30), where the conversion member (30) cooperates with the valve needle assembly (20) to convert rotation of the conversion member (30) into reciprocating movement of the valve needle assembly (20); and a mover assembly (52), where the mover assembly (52) and the conversion member (30) abut against each other on at least one plane, so that the mover assembly (52) drives the conversion member (30) to rotate.

## Description

### CROSS-REFERENCE TO RELATED APPLICATIONS

This application is based on and claims priority to Chinese Patent Application No. 2023111300456 filed on August 31, 2023, which is incorporated herein by reference in its entirety.

### TECHNICAL FIELD

This application relates to the field of electronic expansion valve technologies, and in particular, to an electronic expansion valve and a thermal management system having the electronic expansion valve, and a vehicle.

### BACKGROUND

In related technologies, when a valve needle assembly in an electronic expansion valve seals a valve port, liquid leakage may occur.

### SUMMARY

This application is intended to resolve at least one of the technical problems in the prior art. Therefore, this application provides an electronic expansion valve. In the electronic expansion valve, a mover assembly drives a conversion member to rotate. Rotation of the conversion member is converted into reciprocating movement of a valve needle assembly, so that the entire valve needle assembly performs reciprocating movement only along an axial direction of the entire valve needle assembly. In this way, when the valve needle assembly seals a valve port, the valve needle assembly does not perform rotational friction relative to the valve port, thereby reducing wear of the valve needle assembly, and reducing the possibility of liquid leakage. In addition, the mover assembly cooperates with the conversion member through plane abutment between the mover assembly and the conversion member. The structure is simple, and the mounting is convenient. This helps reduce structural complexity of the electronic expansion valve, and reduce production costs of the electronic expansion valve.

This application further provides a thermal management system having the electronic expansion valve and a vehicle.

An electronic expansion valve according to an embodiment of a first aspect of this application includes: a valve seat assembly, the valve seat assembly being provided with a valve port; a valve needle assembly, the valve needle assembly being disposed in the valve seat assembly capable of moving reciprocally to open or close the valve port; a conversion member, the conversion member cooperating with the valve needle assembly to convert rotation of the conversion member into reciprocating movement of the valve needle assembly; and a mover assembly, the mover assembly being sleeved on the conversion member, and the mover assembly and the conversion member abutting against each other on at least one plane, so that the mover assembly drives the conversion member to rotate.

In the electronic expansion valve according to this embodiment of this application, the mover assembly drives the conversion member to rotate through plane abutment between the mover assembly and the conversion member, so that when the valve needle assembly seals the valve port, the valve needle assembly does not perform rotational friction relative to the valve port, thereby reducing wear of the valve needle assembly, and reducing the possibility of liquid leakage. In addition, the mover assembly cooperates with the conversion member through plane abutment between the mover assembly and the conversion member. The structure is simple, and the mounting is convenient. This helps reduce structural complexity of the electronic expansion valve, and reduce production costs of the electronic expansion valve.

In addition, the electronic expansion valve according to the foregoing embodiment of this application may further have the following additional technical features:

According to some embodiments of this application, an outer peripheral wall of the conversion member includes a plurality of first abutment planes spaced apart along a circumferential direction, and the plurality of first abutment planes and the mover assembly abut against each other.

According to some embodiments of this application, an inner peripheral wall of the mover assembly includes a plurality of second abutment planes spaced apart along the circumferential direction, and the plurality of second abutment planes respectively abut against the plurality of first abutment planes.

According to some embodiments of this application, the conversion member is provided with a support portion, and the support portion supports a first end face of the mover assembly that faces the valve port.

According to some optional embodiments of this application, an inner peripheral wall of the mover assembly is provided with a plurality of abutment members spaced apart, and the plurality of abutment members separately abut against the support portion.

According to some embodiments of this application, an end of the conversion member that is away from the valve port extends out of the mover assembly. The electronic expansion valve further includes a stopper. The stopper is fastened to the end of the conversion member and abuts against a second end face of the mover assembly that is away from the valve port.

According to some embodiments of this application, the electronic expansion valve further includes: a rotation stopper. The rotation stopper is mounted to the valve seat assembly. The rotation stopper cooperates with a cooperation portion of the valve needle assembly to limit a degree of rotational freedom of the valve needle assembly.

According to some optional embodiments of this application, the rotation stopper is located on a side of the conversion member that faces the valve port.

According to some optional embodiments of this application, a cross section of an outer peripheral wall of the cooperation portion along a radial direction of the valve needle assembly forms a non-circular shape. The rotation stopper is sleeved on the cooperation portion, and the rotation stopper cooperates with the cooperation portion in a contact manner.

According to some optional embodiments of this application, the cooperation portion is configured to abut against the conversion member to limit movement of the valve needle assembly.

According to some embodiments of this application, the valve needle assembly includes: a valve stem, the valve stem cooperating with the conversion member to convert rotation of the conversion member into reciprocating movement of the valve stem; a valve needle, the valve needle being configured to open or close the valve port, and the valve needle cooperating with the valve stem to be driven by the valve stem to move; and an elastic member, the elastic member being separately connected to the valve stem and the valve needle, and when the valve needle closes the valve port, the valve stem being movable toward the valve port to compress the elastic member to form a preload force.

In some embodiments, the valve needle is provided with an accommodation cavity. The elastic member is mounted inside the accommodation cavity. The valve stem extends into the accommodation cavity. The elastic member abut against the valve stem and an inner bottom wall of the accommodation cavity.

In some examples, an end of the accommodation cavity that faces the valve stem is provided with a pressure sleeve. An end of the valve stem that extends into the accommodation cavity is configured to abut against the pressure sleeve.

According to an embodiment of a second aspect of this application, a thermal management system is provided. The thermal management system includes the electronic expansion valve according to the embodiment of the first aspect of this application.

In the thermal management system according to this embodiment of this application, the electronic expansion valve according to the embodiment of the first aspect of this application is used, so that the mover assembly cooperates with the conversion member through plane abutment between the mover assembly and the conversion member. The structure is simple, and the mounting is convenient. This helps reduce structural complexity of the electronic expansion valve, and reduce production costs of the electronic expansion valve.

According to an embodiment of a third aspect of this application, a vehicle is provided. The vehicle includes the thermal management system according to the embodiment of the second aspect of this application.

In the vehicle according to this embodiment of this application, the electronic thermal management system according to the embodiment of the second aspect of this application is used, so that the mover assembly cooperates with the conversion member through plane abutment between the mover assembly and the conversion member. The structure is simple, and the mounting is convenient. This helps reduce structural complexity of the electronic expansion valve, and reduce production costs of the electronic expansion valve.

Additional aspects and advantages of this application will be set forth in part in the following description, and in part will become apparent from the following description, or may be learned through the practice of this application.

### BRIEF DESCRIPTION OF DRAWINGS

The above and/or additional aspects and advantages of this application become apparent and easily understandable from the description of embodiments with reference to the following accompanying drawings, in which:
FIG. 1 is a cross-sectional view of an electronic expansion valve according to an embodiment of this application;
FIG. 2 is a structural diagram of a valve needle assembly according to an embodiment of this application;
FIG. 3 is a cross-sectional view of a valve needle assembly according to an embodiment of this application;
FIG. 4 is a structural diagram of a rotation stopper according to an embodiment of this application;
FIG. 5 is a structural diagram of a mover assembly according to an embodiment of this application;
FIG. 6 is a structural diagram of a conversion member according to an embodiment of this application; and
FIG. 7 is a structural diagram of a vehicle and a thermal management system according to an embodiment of this application.

Reference numerals: 1: electronic expansion valve; 10: valve seat assembly; 101: valve seat; 102: valve cover; 11: mounting cavity; 12: valve port;
20: valve needle assembly; 21: valve stem; 211: cooperation portion; 212: second limiting surface; 22: valve needle; 221: accommodation cavity; 222: pressure sleeve; 23: elastic member; 24: annular groove;
30: conversion member; 31: support portion; 32: mounting groove; 33: first abutment plane;
40: rotation stopper; 41: first limiting surface;
52: mover assembly; 521: first end face; 522: second end face; 523: abutment member; 524: second abutment plane;
61: stopper; 91: vehicle; 92: thermal management system.

### DESCRIPTION OF EMBODIMENTS

Embodiments of this application are described in detail below, examples of which are illustrated in the accompanying drawings. Same or similar reference numerals throughout indicate same or similar elements or elements having same or similar functions. The embodiments described below with reference to the accompanying drawings are examples and are intended to explain this application, and shall not be construed as a limitation on this application.

In the description of this application, it will be understood that a directional or positional relationship indicated by terms "center," "longitudinal", "transverse", "vertical", "width", "thickness", "top", "bottom", "inner", "outer", and the like is based on a directional or positional relationship shown in the accompanying drawings, which is only for the purpose of facilitating the description of this application and simplifying the description, and is not intended to indicate or imply that an apparatus or element referred to must have a specific direction, be constructed and operated in a specific direction. Therefore, these terms should not be construed as limiting this application.

Furthermore, terms "first" and "second" are merely intended for the purpose of description, and will not be understood as indicating or implying relative importance or implicitly indicating a quantity of indicated technical features. Therefore, a feature limited by "first" or "second" may explicitly or implicitly include one or more features. In the description of this application, unless otherwise clearly and specifically defined, "a plurality of" means at least two, for example, two or three.

In this application, unless otherwise clearly specified and defined, a term "mounting", "being connect to", "connection", "fastening", or the like will be understood in a broad sense, for example, may be a fixed connection, a detachable connection, or an integral connection; or may be a mechanical connection or an electrical connection or communication with each other; or may be a direct connection, an indirect connection through an intermediary medium, an internal communication between two elements, or an interaction between two elements. For those of ordinary skill in the art, specific meanings of the foregoing terms in this application may be interpreted according to a specific condition.

In this application, unless otherwise clearly specified and defined, the description that a first feature is "above" or "below" a second feature may indicate that the first feature and the second feature are in direct contact, or may indicate that the first feature and the second feature are not in direct contact but are in contact through another feature between the first feature and the second feature. Moreover, the description that the first feature is "above", "over" or "on" the second feature indicates that the first feature is directly above or obliquely above the second feature, or simply indicates that the first feature is at a higher horizontal level than the second feature.

An electronic expansion valve 1 according to an embodiment of this application is described below with reference to the accompanying drawings.

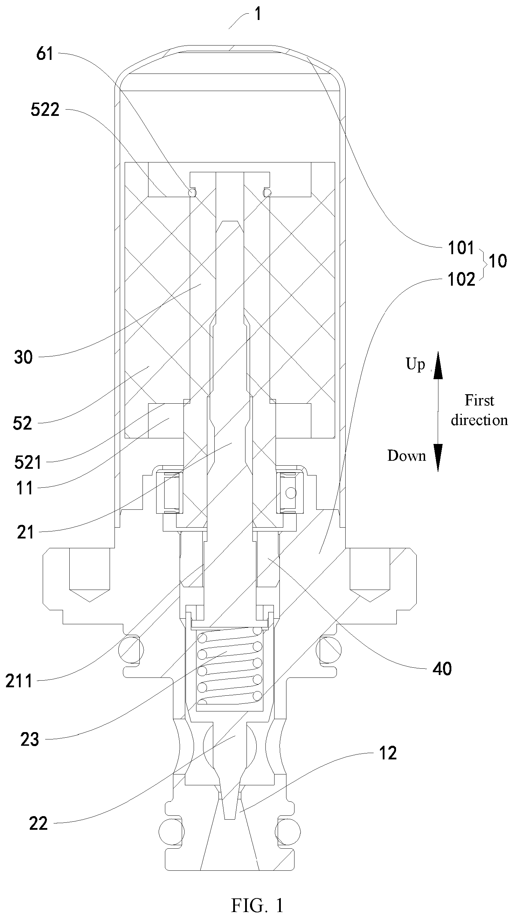

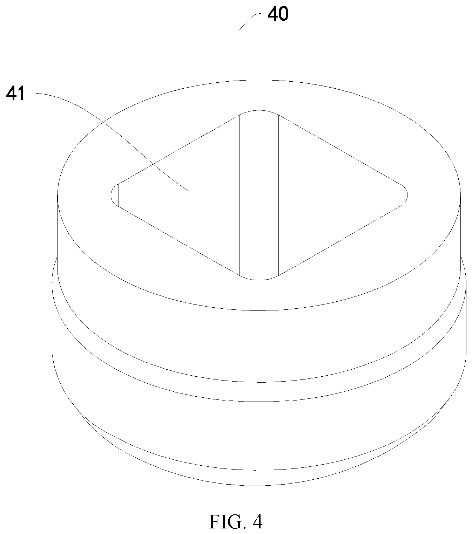

As shown in FIG. 1 to FIG. 6, the electronic expansion valve 1 according to this embodiment of this application includes a valve seat assembly 10, a valve needle assembly 20, a conversion member 30, and a mover assembly 52.

The valve seat assembly 10 is provided with a valve port 12. The valve needle assembly 20 is disposed in the valve seat assembly 10 capable of moving reciprocally. The conversion member 30 cooperates with the valve needle assembly 20 to convert rotation of the conversion member 30 into reciprocating movement of the valve needle assembly 20. When the conversion member 30 rotates, the conversion member 30 may drive the valve needle assembly 20 to perform reciprocating movement, so that the valve needle assembly 20 can open or close the valve port 12.

The mover assembly 52 is sleeved on the conversion member 30. The mover assembly 52 and the conversion member 30 abut against each other on at least one plane, so that the mover assembly 52 drives the conversion member 30 to rotate. The mover assembly 52 cooperates with the conversion member 30 through plane abutment between the mover assembly 52 and the conversion member 30. Accordingly, when the mover assembly 52 rotates, there is a force between planes in which the mover assembly 52 and the conversion member 30 abut against each other to drive the conversion member 30 to rotate.

Specifically, when the mover assembly 52 is sleeved on the conversion member 30, an inner peripheral wall of the mover assembly 52 has at least one plane, and an outer peripheral wall of the conversion member 30 has at least one plane. The two planes cooperate with each other in an abutting manner, so that when the mover assembly 52 rotates, the conversion member 30 is driven by an abutment force between the planes to rotate.

In this way, the mover assembly 52 drives the conversion member 30 to rotate through plane abutment between the mover assembly 52 and the conversion member 30, so that the valve needle assembly 10 does not rotate around an axial direction of the valve needle assembly 10, but performs reciprocating movement only along the axial direction of the valve needle assembly 10. In this way, when the valve needle assembly 10 seals the valve port 12, the valve needle assembly 10 does not perform rotational friction relative to the valve port 12, thereby reducing wear of the valve needle assembly 12, and reducing the possibility of liquid leakage. In addition, a method for cooperation between the mover assembly 52 and the conversion member 30 in a transmission manner is simpler. There is no need to additionally dispose parts to connect the mover assembly 52 and the conversion member 30, and no complex manufacturing process is needed to connect the mover assembly 52 and the conversion member 30. This helps reduce structural complexity of the electronic expansion valve 1, and reduce production costs of the electronic expansion valve 1.

In the electronic expansion valve 1 according to this embodiment of this application, the mover assembly 52 cooperates with the conversion member 30 through plane abutment between the mover assembly 52 and the conversion member 30. Possibility of liquid leakage of the electronic expansion valve 1 can be reduced. In addition, the electronic expansion valve 1 has a simple structure and is mounted conveniently. This helps reduce structural complexity of the electronic expansion valve 1, and reduce production costs of the electronic expansion valve 1.

An electronic expansion valve 1 according to a specific embodiment of this application is described below with reference to the accompanying drawings.

As shown in FIG. 1 to FIG. 6, the electronic expansion valve 1 according to this embodiment of this application includes a valve seat assembly 10, a conversion member 30, a rotation stopper 40, and a mover assembly 52.

In some embodiments of this application, the conversion member 30 includes a plurality of first abutment planes 33 spaced apart along a circumferential direction. The plurality of first abutment planes 33 and the mover assembly 52 abut against each other to increase an area of mutual cooperation between the conversion member 30 and the mover assembly 52. Accordingly, when the mover assembly 52 rotates, there is a sufficient force between the mover assembly 52 and the conversion member 30 to drive the conversion member 30 to rotate.

In some embodiments of this application, the mover assembly 52 includes a plurality of second abutment planes 524 spaced apart along the circumferential direction. The plurality of second abutment planes 524 and the plurality of first abutment planes 33 abut against each other to increase an area of mutual cooperation between the conversion member 30 and the mover assembly 52. Accordingly, when the mover assembly 52 rotates, there is a sufficient force between the mover assembly 52 and the conversion member 30 to drive the conversion member 30 to rotate.

In some embodiments of this application, the conversion member 30 is provided with a support portion 31. The support portion 31 supports a first end face 521 of the mover assembly 52 that faces the valve port. The first end face 521 of the mover assembly 52 faces the valve port 12, thereby using the conversion member 30 to support a position of the mover assembly 52, and accordingly, ensuring cooperation between the mover assembly 52 and the conversion member 30. In this way, when the mover assembly 52 rotates, the mover assembly 52 can use a plane to smoothly drive the conversion member 30 to rotate, and the conversion member 30 can smoothly drive the valve needle assembly 20 to perform reciprocating movement.

As shown in FIG. 1, in this embodiment, the first end face 521 is located on an upper end of the support portion 31. An upper end face of the support portion 31 cooperates with the first end face 521 in an abutting manner to define a position of the mover assembly 52 in the mounting cavity 11 along an up-down direction, thereby ensuring stability of cooperation between the mover assembly 52 and the conversion member 30. In this way, when the mover assembly 52 rotates, the mover assembly 52 can use a plane to smoothly drive the conversion member 30 to rotate, and the conversion member 30 can drive the valve needle assembly 20 to perform reciprocating movement, so that the valve needle assembly 20 can open or close the valve port 12.

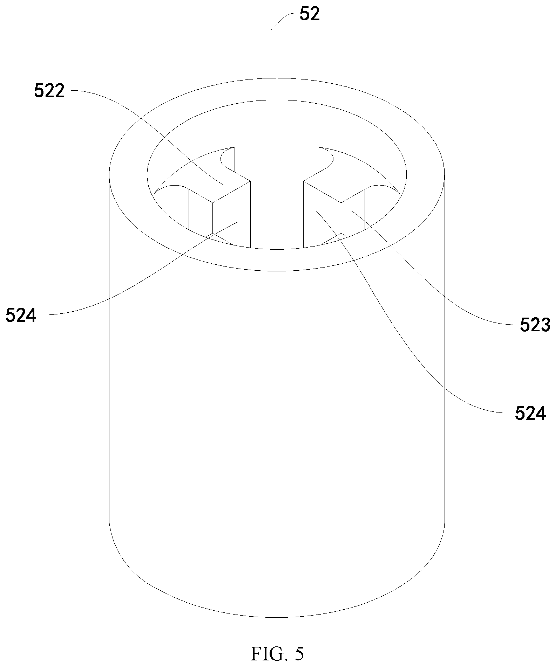

In some optional embodiments of this application, as shown in FIG. 5, the mover assembly 52 is provided with a plurality of abutment members 523. The abutment members 523 are spaced apart on an inner peripheral wall of the mover assembly 52. The plurality of abutment members 523 separately abut against the support portion 31, so that the support portion 31 can support the mover assembly 52.

In some embodiments, the support portion 31 is located below the abutment member 523. Lower end faces of the plurality of abutment members 523 form a first end face 521. The first end face 521 cooperates with the upper end face of the support portion 31 in an abutting manner. Accordingly, the support portion 31 can support the abutment member 523, and further, support a position of the mover assembly 52.

The plurality of abutment members 523 form a second abutment plane 524 toward a side wall of the conversion member 30. The conversion member 30 is located between the plurality of abutment members 523. An outer peripheral wall of the conversion member 30 has a plurality of first abutment planes 33. The first abutment plane 33 cooperates with the second abutment plane 524 in an abutting manner. When the mover assembly 52 rotates, the mover assembly 52 can drive the conversion member 30 to rotate, and the conversion member 30 can smoothly drive the valve needle assembly 20 to move.

As shown in FIG. 5, in this embodiment, the mover assembly 52 is provided with four abutment members 523. A side wall of the abutment member 523 that faces the conversion member 30 is a second abutment plane 524. The second abutment plane 524 extends along the up-down direction. The first abutment plane 33 on the conversion member 30 that cooperates with the second abutment plane 524 in an abutting manner extends along the up-down direction, so that the first abutment plane 33 can cooperate with the second abutment plane 524 in an abutting manner, thereby achieving cooperation between the mover assembly 52 and the conversion member 30.

When the mover assembly 52 rotates, the four abutment members 523 rotate accordingly. In this case, the second abutment plane 524 applies a force to the first abutment plane 33, thereby driving the conversion member 30 to rotate.

In some optional embodiments of this application, an end of the conversion member 30 that is away from the valve port 12 extends out of the mover assembly 52. The electronic expansion valve 1 further includes a stopper 61. The stopper 61 is fastened to the end of the conversion member 30. The stopper 61 abuts against a second end face 522 of the mover assembly 52 that is away from the valve port 12, thereby connecting the conversion member 30 and the mover assembly 52. In this way, when the mover assembly 52 rotates, the mover assembly 52 can drive the conversion member 30 to rotate together, and the conversion member 30 can drive the valve needle assembly 20 to perform reciprocating movement within the mounting cavity 11, so that the valve needle assembly 20 can open or close the valve port 12.

In some embodiments, as shown in FIG. 1, FIG. 5, and FIG. 6, the valve seat assembly defines a mounting cavity 11. The valve needle assembly 20 is movable in the mounting cavity 11 along the up-down direction. The first end face 521 of the mover assembly 52 is located on the upper end face of the support portion 31. The second end face 522 of the mover assembly 52 is located on a lower end of the stopper 61. A distance between the upper end face of the support portion 31 and the lower end face of the stopper 61 fits a distance between the first end face 521 and the second end face 522, thereby clamping and fastening the first end face 521 and the second end face 522 between the support portion 31 and the stopper 61, and accordingly, fastening the mover assembly 52 to the conversion member 30. In addition, the second abutment plane 524 of the inner peripheral wall of the mover assembly 52 abuts against the first abutment plane 33 of the outer peripheral wall of the rotor assembly 30, so that when the mover assembly 52 rotates, the mover assembly 52 can drive the conversion member 30 to rotate.

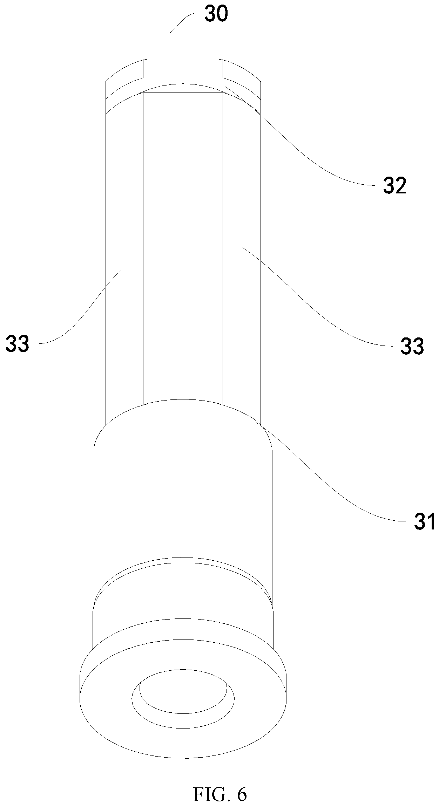

In some embodiments, as shown in FIG. 6, the stopper 61 is a retaining ring. A mounting groove 32 is disposed at an end of the conversion member 30 that is away from the valve port 12. The retaining ring is fastened in the mounting groove 32. The retaining ring is located on an upper end of the second end face 522. A lower end face of the retaining ring cooperates with the second end face 522 in an abutting manner. The first end face 521 of the mover assembly 52 cooperates with the upper end of the support portion 31 in an abutting manner, thereby clamping and fastening the first end face 521 and the second end face 522 to the support portion 31 and the stopper 61. In addition, the second abutment plane 524 of the inner peripheral wall of the mover assembly 52 abuts against the first abutment plane 33 of the outer peripheral wall of the conversion assembly 30, thereby fastening the mover assembly 52 to the conversion member 30. In this way, when the mover assembly 52 rotates, the mover assembly 52 can drive the conversion member 30 to rotate.

In some examples, lower end faces of the plurality of abutment members 523 form a first end face 521. Upper end faces of the plurality of abutment members 523 form a second end face 522. The stopper 61 is located on the upper end of the second end face 522. The support portion 31 is located on a lower end of the first end face 521. The abutment member 523 is clamped between the support portion 31 and the stopper 61, thereby fastening the mover assembly 52 to the conversion member 30. In this way, when the mover assembly 52 rotates, the mover assembly 52 can drive the conversion member 30 to rotate. In addition, positions of the mover assembly 52 and the conversion member 30 along the up-down direction can be defined in a cavity, thereby avoiding relative movement of the mover assembly 52 and the conversion member 30.

In some embodiments of this application, the electronic expansion valve 1 further includes a rotation stopper 40. The rotation stopper 40 is mounted to the valve seat assembly 10. The rotation stopper 40 cooperates with a cooperation portion 211 of the valve needle assembly 20 to limit a degree of rotational freedom of the valve needle assembly 20. Accordingly, when the valve needle assembly 20 opens or closes the valve port 12, the valve needle assembly 20 can only perform reciprocating movement and cannot rotate when being limited by the rotation stopper 40, thereby reducing friction between the valve needle assembly 20 and the valve seat assembly 10, and reducing the degree of mutual wear between the valve needle assembly 20 and the valve seat assembly 10. This helps prolong the service life of the valve needle assembly 20, and prolong the service life of the electronic expansion valve 1.

In some embodiments, the conversion member 30 threadedly cooperates with the valve needle assembly 20. When the conversion member 30 rotates to drive the valve needle assembly 20 to perform reciprocating movement, the valve needle assembly 20 has a tendency to rotate. The rotation stopper 40 is used to limit a degree of rotational freedom of the valve needle assembly 20, thereby preventing the conversion member 30 from driving the valve needle assembly 20 to rotate. Accordingly, when the valve needle assembly 20 performs reciprocating movement, and the valve needle assembly 20 opens or closes the valve port 12, friction between the valve needle assembly 20 and a side wall of the valve port 12 can be reduced, and friction between the valve needle assembly 20 and the valve seat assembly 10 can be reduced. In addition, this helps reduce noise generated in the electronic expansion valve 1.

In some optional embodiments of this application, the rotation stopper 40 is located on a side of the conversion member 30 that faces the valve port 12. The rotation stopper 40 is capable of supporting an end of the valve needle assembly 20 that is close to the valve port 12 when the rotation stopper 40 limits the degree of rotational freedom of the valve needle assembly 20, so that the valve needle assembly 20 can smoothly perform reciprocating movement within the mounting cavity 11. This helps reduce shaking of the valve needle assembly 20 during reciprocating movement, so that the valve needle assembly 20 can smoothly open or close the valve port 12.

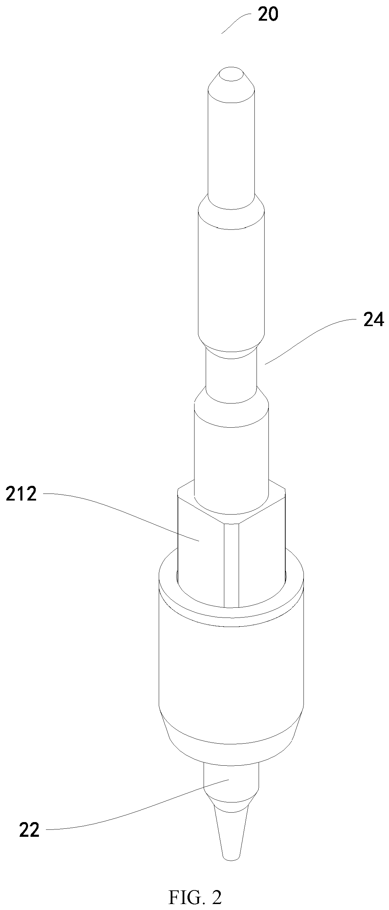

As shown in FIG. 1 and FIG. 2, in this embodiment, the valve needle assembly 20 includes a valve stem 21 and a valve needle 22. The conversion member 30 threadedly cooperates with an upper part of the valve stem 21. The valve needle 22 is driven by the valve stem 21 to move. The rotation stopper 40 is disposed on a lower part of the valve stem 21. A length of the valve stem 21 along the up-down direction is long. The rotation stopper 40 is disposed on the side of the conversion member 30 that faces the valve port 12, that is, on the lower part of the valve stem 21, thereby supporting the lower part of the valve stem 21. Accordingly, this helps reduce a frequency of shaking of the valve stem 21 during reciprocating movement, so that the valve stem 21 can smoothly perform reciprocating movement, the valve stem 21 can drive the valve needle 22 to smoothly perform reciprocating movement, and the valve needle 22 can smoothly open or close the valve port 12. It will be understood herein that the foregoing direction limitation is only for the purpose of facilitating the description of the accompanying drawings, and does not limit an actual arrangement position and direction of the electronic expansion valve 1.

In some optional embodiments of this application, a cross section of an outer peripheral wall of the cooperation portion 211 along a radial direction of the valve needle assembly 20 forms a non-circular shape. The rotation stopper 40 is sleeved on the cooperation portion 211. The rotation stopper 40 cooperates with the cooperation portion 211 in a contact manner. In this way, when the conversion member 30 drives the valve needle assembly 20 to perform reciprocating movement, and the valve needle assembly 20 has a tendency to rotate, the rotation stopper 40 can limit rotation of the cooperation portion 211, thereby limiting rotation of the valve needle assembly 20. In this way, the valve needle assembly 20 can only perform reciprocating movement and cannot rotate, thereby reducing friction between the valve needle assembly 20 and the valve port 12 when the valve needle assembly 20 performs reciprocating movement to open or close the valve port 12, and accordingly, reducing friction between the valve needle assembly 20 and the valve seat assembly 10.

In some embodiments, the cross section of the outer peripheral wall of the cooperation portion 211 along the radial direction may be a non-circular shape such as a triangle, a rectangle, a square, or a hexagon. A non-circular hole is correspondingly defined by the rotation stopper 40. The non-circular hole corresponds to a non-circular shape such as a triangle, a rectangle, a square, or a hexagon. An inner peripheral wall of the rotation stopper 40 is a first limiting surface 41, and an outer peripheral wall of the cooperation portion 211 is a second limiting surface 212.

Under driving of the mover assembly 52, when the valve needle assembly 20 has a tendency to rotate, the valve needle assembly 20 cannot rotate when being limited by the first limiting surface 41, thereby limiting a degree of rotational freedom of the valve needle assembly 20. Accordingly, the valve needle assembly 20 can perform reciprocating movement only along a first direction and cannot rotate. Accordingly, when the valve needle assembly 20 performs reciprocating movement, and the valve needle assembly 20 opens or closes the valve port 12, friction between the valve needle assembly 20 and a side wall of the valve port 12 can be reduced, and accordingly, wear between the valve needle assembly 20 and the valve seat assembly 10 can be reduced. In addition, wear between the valve needle assembly 20 and the valve seat assembly 10 is reduced, thereby reducing noise generated by the electronic expansion valve 1.

In some embodiments of this application, the cooperation portion 211 is configured to abut against the conversion member 30 to limit movement of the valve needle assembly 20, so that a movement direction of the valve needle assembly 20 can be limited, and the valve needle assembly 20 can smoothly open or close the valve port 12.

In some embodiments, the rotation stopper 40 is sleeved on the cooperation portion 211. An inner peripheral wall of the rotation stopper 40 includes a first limiting surface 41, and an outer peripheral wall of the cooperation portion 211 includes a second limiting surface 212. The first limiting surface 41 and the second limiting surface 212 both extend along the first direction. When the conversion member 30 drives the valve stem 21 to perform reciprocating movement along the first direction, the second limiting surface 212 moves along the first limiting surface 41. The first limiting surface 41 can limit a movement direction of the second limiting surface 212, and accordingly, limit a movement direction of the valve needle assembly 20, so that the valve needle assembly 20 can smoothly open or close the valve port 12.

In some other embodiments of this application, the outer peripheral wall of the cooperation portion 211 is provided with one of a guide groove and a guide protrusion. The inner peripheral wall of the rotation stopper 40 is provided with the other of the guide protrusion and the guide groove. The guide protrusion extends into the guide groove and can slide within the guide groove, so that cooperation between the guide protrusion and the guide groove is used to guide a movement direction of the valve needle assembly 20. In addition, when the valve needle assembly 20 has a tendency to rotate, cooperation between the guide protrusion and the guide groove is used to limit rotation of the valve needle assembly 20.

For example, the outer peripheral wall of the cooperation portion 211 is provided with a guide groove. The inner peripheral wall of the rotation stopper 40 is provided with a guide protrusion. The guide groove and the guide protrusion both extend along the first direction. When the conversion member 30 drives the valve needle assembly 20 to move along the first direction, the guide groove moves along the first direction. The guide protrusion slides in the guide groove along the first direction, thereby limiting a movement direction of the cooperation portion 211, and accordingly, limiting a movement direction of the valve needle assembly 20. In this way, the valve needle assembly 20 can smoothly perform reciprocating movement along the first direction, so that the valve needle assembly 20 can smoothly open or close the valve port 12.

In addition, when the valve needle assembly 20 has a tendency to rotate, because the guide protrusion extends into the guide groove, and the rotation stopper 40 is fastened to the valve seat assembly 10, a side wall of the guide groove applies a rotation stopping force to the guide protrusion, so that the valve needle assembly 20 can perform reciprocating movement only along the first direction and cannot rotate. Accordingly, when the valve needle assembly 20 performs reciprocating movement, and the valve needle assembly 20 opens or closes the valve port 12, friction between the valve needle assembly 20 and a side wall of the valve port 12 can be reduced, and accordingly, wear between the valve needle assembly 20 and the valve seat assembly 10 can be reduced. In addition, this helps reduce noise generated by the electronic expansion valve 1.

In some embodiments of this application, the electronic expansion valve 1 further includes a stator assembly. The stator assembly is mounted to the valve seat assembly 10. The stator assembly cooperates with the mover assembly 52, so that the mover assembly 52 can rotate. During rotation, the mover assembly 52 can drive the conversion member 30 to rotate. The conversion member 30 can drive the valve needle assembly 20 to perform reciprocating movement, so that the valve needle assembly 20 can open or close the valve port 12.

In some embodiments, the stator assembly includes a motor. An output shaft of the motor cooperates with the mover assembly 52 to drive the mover assembly 52 to rotate. In some other embodiments, the stator assembly includes a coil winding. A varying magnetic field generated after the coil winding is energized is capable of driving the mover assembly 52 to rotate.

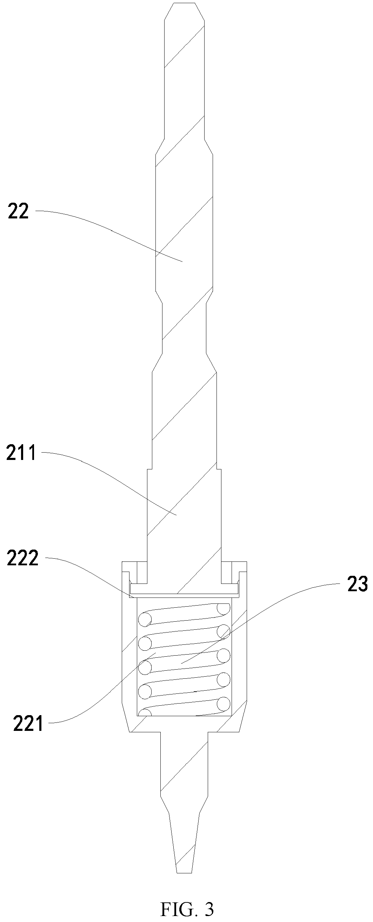

In some optional embodiments of this application, as shown in FIG. 2 and FIG. 3, the valve needle assembly 20 includes a valve stem 21, a valve needle 22, and an elastic member 23. The valve stem 21 cooperates with the conversion member 30, so that when the mover assembly 52 drives the conversion member 30 to rotate, under driving of the conversion member 30, the valve stem 21 may perform reciprocating movement. The valve needle 22 cooperates with the valve stem 21, so that when the valve stem 21 performs reciprocating movement, the valve stem 21 can drive the valve needle 22 to perform reciprocating movement. Accordingly, the valve needle 22 can open or close the valve port 12.

The elastic member 23 is separately connected to the valve stem 21 and the valve needle 22. When the valve needle 22 closes the valve port 12, the valve stem 21 is movable toward the valve port 12 to compress the elastic member 23 and form a preload force. In this way, when the valve needle 22 closes the valve port 12, the elastic member 23 applies a force facing the valve port 12 to the valve needle 22, so that the valve needle 22 can sufficiently close the valve port 12. This helps reduce the possibility of a gap between the valve needle 22 and the valve port 12, reduce the possibility of liquid leakage of the electronic expansion valve 1, and improve a qualification rate of the electronic expansion valve 1.

In some embodiments, the valve stem 21 may perform reciprocating movement along the up-down direction. The valve stem 21 may drive the valve needle 22 to perform reciprocating movement along the up-down direction. A lower end of the valve needle 22 that faces the valve port 12 forms a cone. An apex of the cone faces downward. When the valve stem 21 drives the valve needle 22 to move downward, a distance between the outer peripheral surface of the valve needle 22 and the side wall of the valve port 12 is gradually reduced. When the outer peripheral surface of the valve needle 22 cooperates with the side wall of the valve port 12 in an abutting manner, the valve needle 22 closes the valve port 12. In this case, the valve stem 21 may continue to move downward but may not drive the valve needle 22 to move downward. In this case, the valve stem 21 compresses the elastic member 23, so that the elastic member 23 forms a preload force.

Specifically, after the elastic member 23 is compressed, the elastic member 23 applies a downward force to the valve needle 22, so that an outer peripheral surface of a lower end of the valve needle 22 closely fits a wall surface of the valve port 12, thereby sufficiently sealing the valve port 12, avoiding a gap between the valve needle 22 and the valve port 12, and avoiding liquid leakage.

In some examples, the lower end of the valve needle 22 is made of an elastic material. When the valve needle 22 moves downward, a distance between the lower end of the valve needle 22 and a side wall of the valve port 12 is gradually reduced, and the lower end of the valve needle 22 may be adaptively deformed to seal the valve port 12.

In some specific embodiments of this application, as shown in FIG. 3, the valve needle 22 is provided with an accommodation cavity 221. The elastic member 23 is mounted inside the accommodation cavity 221. The valve stem 21 extends into the accommodation cavity 221. The elastic member 23 abuts against the valve stem 21 and an inner bottom wall of the accommodation cavity 221. When the valve stem 21 drives the valve needle 22 to move and closes the valve port 12, the valve stem 21 may still move in the accommodation cavity 221 in a direction close to the valve port 12, so that a lower end of the valve stem 21 can compress the elastic member 23 in the accommodation cavity 221, and the elastic member 23 forms a preload force. In this case, the elastic member 23 applies a force facing the valve port 12 to the valve needle 22, so that the valve needle 22 can close the valve port 12. This avoids liquid leakage of the electronic expansion valve 1.

In some embodiments, an end of the accommodation cavity 221 that faces the valve stem 21 is provided with a pressure sleeve 222. An end of the valve stem 21 that extends into the accommodation cavity 221 is configured to abut against the pressure sleeve 222. In this way, when the end of the valve stem 21 abuts against the pressure sleeve 222, the valve stem 21 can push the valve needle 22 to move. In addition, the pressure sleeve 222 can limit a movement range of the valve stem 21 in the accommodation cavity 221, thereby avoiding a situation in which the elastic member 23 fails because the elastic member 23 compresses the valve stem 21 excessively.

In some embodiments, as shown in FIG. 3, the valve stem 21 is movable along the up-down direction. The pressure sleeve 222 is located below the valve stem 21. When the lower end of the valve stem 21 cooperates with the pressure sleeve 222 in an abutting manner, the elastic member 23 is compressed and applies a force facing the valve port 12 to the valve needle 22, and in this case, the lower end of the valve stem 21 cannot continue to move in the accommodation cavity 221, so that the elastic member 23 in the accommodation cavity 221 cannot continue to be compressed. In this way, a degree to which the elastic member 23 is compressed can be controlled, and accordingly, a magnitude of a preload force on the elastic member 23 can be controlled, thereby avoiding a situation in which the valve needle 22 is engaged at the valve port 12 due to an excessive downward force applied by the elastic member 23 to the valve needle 22.

In some embodiments, the valve stem 21 may push the valve needle 22 to perform reciprocating movement along the up-down direction. The conversion member 30 is located on the upper end of the cooperation portion 211. When the valve needle 22 cooperates with the wall surface of the valve port 12 in an abutting manner, the valve needle 22 closes the valve port 12, and the valve needle 22 no longer moves downward. When the valve port 12 needs to be opened, the conversion member 30 drives the valve stem 21 to move upward, and the valve stem 21 drives the valve needle 22 to move upward to open the valve port 12. When the upper end face of the cooperation portion 211 cooperates with the lower end face of the conversion member 30 in an abutting manner, the valve stem 21 no longer moves upward, and the valve stem 21 no longer drives the valve needle 22 to move upward, thereby limiting a movement range of the valve stem 21 and the valve needle 22 along the up-down direction. In this way, the valve needle 22 can smoothly open or close the valve port 12.

In some optional embodiments of this application, as shown in FIG. 2, an annular groove 24 is disposed on an outer peripheral wall of the valve stem 21. The annular groove 24 is spaced from an inner wall of the conversion member 30, thereby reducing an area of cooperation between the valve stem 21 and the conversion member 30, and accordingly, helping reduce wear between the valve stem 21 and the conversion member 30.

Specifically, when the stator assembly drives the conversion member 30 to rotate, and the conversion member 30 drives the valve stem 21 to perform reciprocating movement, the valve stem 21 may move relative to the conversion member 30. An annular groove 24 is disposed on the outer peripheral wall of the valve stem 21 to reduce a contact area between the outer peripheral wall of the valve stem 21 and the conversion member 30. Accordingly, when the valve stem 21 moves relative to the conversion member 30, mutual wear between the valve stem 21 and the conversion member 30 can be reduced, and the service life of the electronic expansion valve 1 can be prolonged.

In some embodiments of this application, as shown in FIG. 1, the valve seat assembly 10 includes a valve seat 101 and a valve cover 102. The valve seat 101 defines a mounting cavity 11 having an upper opening. The valve port 12 is located on a lower end of the valve seat 101. The valve port 12 communicates with the mounting cavity 11. Parts such as the valve needle assembly 20, the stator assembly, the mover assembly 52, and the rotation stopper 40 that are placed in the mounting cavity 11 can enter the mounting cavity 11 through a top opening.

The valve port 12 is disposed on the lower end of the valve seat 101, so that a medium such as liquid entering the valve seat assembly 10 can flow out of the valve port 12 under impact of gravity.

A thermal management system 92 according to an embodiment of this application is described below. The thermal management system 92 according to this embodiment of this application includes the electronic expansion valve 1 according to the foregoing embodiment of this application.

In the thermal management system 92 according to this embodiment of this application, the electronic expansion valve 1 according to the foregoing embodiment of this application is used, so that the possibility of liquid leakage of the electronic expansion valve 1 can be reduced. In addition, the structure is simple, and the mounting is convenient. This helps reduce structural complexity of the electronic expansion valve 1, and reduce production costs of the electronic expansion valve 1.

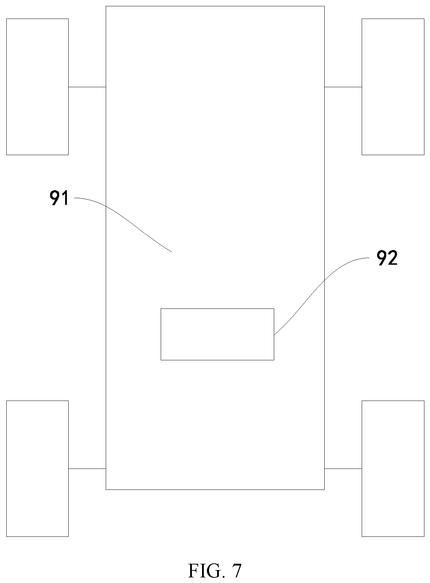

A vehicle 91 according to an embodiment of this application is described below with reference to FIG. 7. The vehicle 91 according to this embodiment of this application includes the thermal management system 92 according to the foregoing embodiment of this application.

In the vehicle 91 according to this embodiment of this application, the thermal management system 92 according to the foregoing embodiment of this application is used, so that the possibility of liquid leakage of the electronic expansion valve 1 can be reduced. In addition, the structure is simple, and the mounting is convenient. This helps reduce structural complexity of the electronic expansion valve 1, and reduce production costs of the electronic expansion valve 1.

Other structures and operations of the vehicle 91 according to this embodiment of this application are known to a person of ordinary skill in the art, which will not be described in detail herein.

In the description of this specification, descriptions referring to the terms "one embodiment", "some embodiments", "an example", "a specific example", or "some examples" mean that specific features, structures, materials, or characteristics described in connection with the embodiment or example are included in at least one embodiment or example of this application. In this specification, the schematic representations of the foregoing terms are not necessarily aimed at the same embodiment or example. Moreover, the specific features, structures, materials or characteristics described may be combined in any one or more embodiments or examples in a suitable manner. Furthermore, those skilled in the art may combine and integrate different embodiments or examples described in this specification.

Although embodiments of this application have been shown and described above, it will be understood that the foregoing embodiments are examples and should not be construed as limiting this application. A person skilled in the art may make changes, modifications, substitutions, and variations to the foregoing embodiments within the scope of this application.

## Claims

1. An electronic expansion valve, comprising:
a valve seat assembly, the valve seat assembly being provided with a valve port;
a valve needle assembly, the valve needle assembly being disposed in the valve seat assembly capable of moving reciprocally to open or close the valve port;
a conversion member, the conversion member cooperating with the valve needle assembly to convert rotation of the conversion member into reciprocating movement of the valve needle assembly; and
a mover assembly, the mover assembly being sleeved on the conversion member, and the mover assembly and the conversion member abutting against each other on at least one plane, so that the mover assembly drives the conversion member to rotate.

2. The electronic expansion valve according to claim 1, wherein an outer peripheral wall of the conversion member comprises a plurality of first abutment planes spaced apart along a circumferential direction, and the plurality of first abutment planes and the mover assembly abut against each other.

3. The electronic expansion valve according to claim 2, wherein an inner peripheral wall of the mover assembly comprises a plurality of second abutment planes spaced apart along the circumferential direction, and the plurality of second abutment planes respectively abut against the plurality of first abutment planes.

4. The electronic expansion valve according to any one of claims 1 to 3, wherein the conversion member is provided with a support portion, and the support portion supports a first end face of the mover assembly that faces the valve port.

5. The electronic expansion valve according to claim 4, wherein an inner peripheral wall of the mover assembly is provided with a plurality of abutment members spaced apart, and the plurality of abutment members separately abut against the support portion.

6. The electronic expansion valve according to any one of claims 1 to 5, wherein an end of the conversion member that is away from the valve port extends out of the mover assembly, the electronic expansion valve further comprises a stopper, and the stopper is fastened to the end of the conversion member and abuts against a second end face of the mover assembly that is away from the valve port.

7. The electronic expansion valve according to any one of claims 1 to 6, further comprising:
a rotation stopper, the rotation stopper being mounted to the valve seat assembly, and the rotation stopper cooperating with a cooperation portion of the valve needle assembly to limit a degree of rotational freedom of the valve needle assembly.

8. The electronic expansion valve according to claim 7, wherein the rotation stopper is located on a side of the conversion member that faces the valve port.

9. The electronic expansion valve according to claim 7 or 8, wherein a cross section of an outer peripheral wall of the cooperation portion along a radial direction of the valve needle assembly forms a non-circular shape, the rotation stopper is sleeved on the cooperation portion, and the rotation stopper cooperates with the cooperation portion in a contact manner.

10. The electronic expansion valve according to any one of claims 7 to 9, wherein the cooperation portion is configured to abut against the conversion member to limit movement of the valve needle assembly.

11. The electronic expansion valve according to any one of claims 1 to 10, wherein the valve needle assembly comprises:
a valve stem, the valve stem cooperating with the conversion member to convert rotation of the conversion member into reciprocating movement of the valve stem;
a valve needle, the valve needle being configured to open or close the valve port, and the valve needle cooperating with the valve stem to be driven by the valve stem to move; and
an elastic member, the elastic member being separately connected to the valve stem and the valve needle, and when the valve needle closes the valve port, the valve stem being movable toward the valve port to compress the elastic member to form a preload force.

12. The electronic expansion valve according to claim 11, wherein the valve needle is provided with an accommodation cavity, the elastic member is mounted inside the accommodation cavity, the valve stem extends into the accommodation cavity, and the elastic member abuts against the valve stem and an inner bottom wall of the accommodation cavity.

13. The electronic expansion valve according to claim 12, wherein an end of the accommodation cavity that faces the valve stem is provided with a pressure sleeve, and an end that is of the valve stem and that extends into the accommodation cavity is configured to abut against the pressure sleeve.

14. A thermal management system, comprising the electronic expansion valve according to any one of claims 1 to 13.

15. A vehicle, comprising the thermal management system according to claim 14.
